(19)

Europäisches Patentamt

European Patent Office

Office européen des brevets

(11) **EP 4 407 585 A1**

(12) **EUROPÄISCHE PATENTANMELDUNG**

(43) Veröffentlichungstag:
**31.07.2024 Patentblatt 2024/31**

(21) Anmeldenummer: **24152850.4**

(22) Anmeldetag: **19.01.2024**

(51) Internationale Patentklassifikation (IPC):
**G08G 1/16** (2006.01) **B62J 6/24** (2020.01)
**B62J 45/412** (2020.01) **B62J 50/22** (2020.01)

(52) Gemeinsame Patentklassifikation (CPC):
**G08G 1/166; B62J 27/00; B62J 45/41; B62J 50/22;
G08G 1/167**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **24.01.2023 DE 102023200499**

(71) Anmelder: **Robert Bosch GmbH
70442 Stuttgart (DE)**

(72) Erfinder:
- **Peters, Matthew
  Ypsilanti, MI 48198 (US)**
- **Liao, Jiawei
  Clayton, Victoria 3168 (AU)**
- **Moriarty, Daniel
  Glenroy, 3046 (AU)**
- **Bain, Simeon
  Montmorency, VIC 3094 (AU)**

(54) **VERFAHREN UND STEUERGERÄT ZUM BETREIBEN EINES MOTORRADS**

(57)     Die vorliegende Erfindung bezieht sich auf ein Verfahren zum Betreiben eines Motorrads (100), wobei eine Abstandsinformation (120) bereitgestellt wird, wenn eine Zeitlücke (116) zwischen dem Motorrad (100) und einem Fahrzeug (106) in einem Rückraum (112) des Motorrads (100) kleiner als ein vordefinierter Zeitwert (118) ist.

EP 4 407 585 A1

Fig. 1

**Beschreibung**

Gebiet der Erfindung

Die Erfindung betrifft ein Verfahren zum Betreiben eines Motorrads, ein entsprechendes Steuergerät sowie ein entsprechendes Computerprogrammprodukt.

Stand der Technik

Ein Fahrer des Motorrads konzentriert sich beim Fahren im Wesentlichen auf einen Straßenverlauf vor dem Motorrad und blickt dabei tendenziell wenig in den Rückspiegel. Dadurch kann er beispielsweise ein nahe hinter dem Motorrad fahrendes Fahrzeug nicht bemerken. Wenn der Fahrer dann stark bremst, kann eine gefährliche Situation entstehen.

Offenbarung der Erfindung

Vor diesem Hintergrund werden mit dem hier vorgestellten Ansatz ein Verfahren zum Betreiben eines Motorrads, ein entsprechendes Steuergerät, sowie ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

Vorteile der Erfindung

Bei dem hier vorgestellten Ansatz wird ein als Rückraum bezeichneter Bereich hinter einem Motorrad durch ein Sensorsystem des Motorrads erfasst und von dem Sensorsystem bereitgestellte Informationen über den Rückraum ausgewertet. Dabei werden Fahrzeuge in dem Rückraum erkannt und zumindest ein aktueller Abstand des jeweiligen Fahrzeugs zu einem Heck des Motorrads bestimmt. Zusätzlich wird eine aktuelle Geschwindigkeit des Motorrads verwendet, um den Abstand zu bewerten.

Der Abstand kann bei niedrigen Geschwindigkeiten kleiner als bei hohen Geschwindigkeiten sein. Der Abstand kann daher als Zeitlücke ausgedrückt werden. Die Zeitlücke ist eine Zeitdauer, die vergeht, bis ein nachfolgendes Fahrzeug einen Punkt erreicht, den zuvor das Motorrad überfahren hat. Die Zeitlücke bleibt also gleich, wenn das nachfolgende Fahrzeug den Abstand proportional zu einer Geschwindigkeitszunahme erhöht.

Hier wird aus dem gemessenen Abstand und der aktuellen Geschwindigkeit des Motorrads die Zeitlücke bestimmt und mit einem vorbestimmten Wert für die Zeitlücke verglichen. Wenn der Abstand eines Fahrzeugs und die Geschwindigkeit des Motorrads eine Zeitlücke kleiner als der Wert ergeben, wird eine Abstandsinformation ausgegeben. Die Abstandsinformation hat dabei vorrangig Informationscharakter, da noch keine akut gefährliche Situation vorliegt. Durch falsches Verhalten des Motorrads und/oder des nachfolgenden Fahrzeugs kann daraus aber schnell eine gefährliche Situation entstehen.

Durch den hier vorgestellten Ansatz kann vor einer noch nicht akuten Gefahr für das Motorrad gewarnt werden. Die noch nicht akute Gefahr kann als latente Gefahr bezeichnet werden. Ein Fahrer des Motorrads kann durch die Abstandsinformation informiert werden, dass das Fahrzeug nahe auffährt. Damit kann der Fahrer Fahrmanöver vermeiden, die zu einer akuten Gefahr führen würden.

Es wird ein Verfahren zum Betreiben eines Motorrads vorgeschlagen, wobei mittels eines nach hinten gerichteten Sensorsystems des Motorrads ein Abstand zwischen dem Motorrad und einem in einem Rückraum des Motorrads nachfolgenden Fahrzeug ermittelt wird und eine Abstandsinformation an einer Mensch-Maschine-Schnittstelle bereitgestellt wird, wenn eine Zeitlücke, welche unter Berücksichtigung des ermittelten Abstands sowie einer aktuellen Geschwindigkeit des Motorrads ermittelt wird, kleiner als ein vordefinierter Zeitwert ist.

Ideen zu Ausführungsformen der vorliegenden Erfindung können unter anderem als auf den nachfolgend beschriebenen Gedanken und Erkenntnissen beruhend angesehen werden.

Ein Fahrzeug in einem Rückraum hinter einem Motorrad kann von einem anderen Verkehrsteilnehmer gesteuert werden. Das Fahrzeug kann dabei ein anderes Motorrad, ein Kraftfahrzeug oder ein Lastkraftwagen sein.

Das Fahrzeug kann von einem nach hinten gerichteten Sensorsystem des Motorrads erfasst werden. Das Sensorsystem kann insbesondere einen Radarsensor aufweisen. Das Sensorsystem kann zumindest einen Abstand zwischen dem Motorrad und dem Fahrzeug in einer Sensorinformation abbilden. Das Sensorsystem kann auch eine Richtung von dem Motorrad zu dem Fahrzeug in einer Richtungsinformation abbilden.

Eine Zeitlücke kann einen geschwindigkeitsabhängigen Abstand zwischen dem Motorrad und dem Fahrzeug repräsentieren. Eine konstante Zeitlücke kann für unterschiedliche Geschwindigkeiten unterschiedliche Abstände repräsentieren. Dabei wird der Abstand mit steigender Geschwindigkeit größer. Die Zeitlücke kann also ein Verhältnis zwischen einem absoluten Abstand und einer Geschwindigkeit des Motorrads abbilden. Der geschwindigkeitsabhängige Abstand beziehungsweise die Zeitlücke kann eine von dem Fahrzeug ausgehende latente Gefahr für das Motorrad abbilden.

Ein Zeitwert kann ein Schwellenwert für den geschwindigkeitsabhängigen Abstand sein. Wenn die Zeitlücke kleiner als der Zeitwert ist, kann latente Gefahr für das Motorrad bestehen.

Eine Abstandsinformation kann insbesondere einen Fahrer des Motorrads über die latente Gefahr informieren. Beispielsweise kann die Abstandsinformation über eine Mensch-Maschine-Schnittstelle des Motorrads für den Fahrer bereitgestellt werden. Ebenso kann die Abstandsinformation über eine Kommunikationsschnittstelle des Motorrads an das Fahrzeug übermittelt werden und im Fahrzeug auf einer Anzeige des Fahrzeugs für einen Fahrer des Fahrzeugs bereitgestellt werden. Ebenso kann die Abstandsinformation über eine optische Signalisierungseinrichtung des Motorrads für andere Verkehrsteilnehmer bereitgestellt werden. Die Abstandsinformation kann optisch, akustisch und/oder haptisch für einen Fahrer des Motorrads und/oder einen Fahrer des Fahrzeugs bereitgestellt werden. Beispielsweise kann für den Fahrer des Motorrads ein Fahrzeugsymbol und/oder Warnsymbol hinter beziehungsweise unter einem Symbol des Motorrads dargestellt werden.

Die Abstandsinformation kann bereitgestellt werden, wenn die Zeitlücke länger als eine vordefinierte Zeitdauer kleiner als der Zeitwert ist. Die Abstandsinformation kann um die Zeitdauer zeitverzögert bereitgestellt werden. Wenn die Zeitlücke innerhalb der Zeitdauer wieder größer als der Zeitwert wird, kann auf das Bereitstellen verzichtet werden. Damit kann verhindert werden, dass die Abstandsinformation bereitgestellt wird, obwohl die Zeitlücke zu dem Fahrzeug den Zeitwert nur kurz unterschreitet.

Die Abstandsinformation kann bereitgestellt werden, wenn eine Annäherungsgeschwindigkeit des Fahrzeugs an das Motorrad kleiner als ein Grenzwert ist. Die Abstandsinformation soll eine latente Gefahr signalisieren. Die Gefahr ist nur latent, wenn sich das Fahrzeug langsam annähert. Wenn sich das Fahrzeug zu schnell annähert, also wenn die Annäherungsgeschwindigkeit größer als der Grenzwert ist, kann eine eine Gefährdung des Motorrads durch das Fahrzeug abbildende Gefährdungsinformation bereitgestellt werden. Eine Gefährdungsinformation kann eine Notwendigkeit zum Handeln signalisieren, um beispielsweise eine Kollision des Fahrzeugs mit dem Motorrad zu verhindern. Wenn die Annäherungsgeschwindigkeit größer als der Grenzwert ist, kann eine Zeit bis zur Kollision berechnet werden. Die Gefährdungsinformation kann eine Eskalation der Abstandsinformation repräsentieren.

Der Zeitwert kann unter Verwendung der Geschwindigkeit des Motorrads eingestellt werden. Die Zeitlücke, ab der die Abstandsinformation bereitgestellt wird, kann mit steigender Geschwindigkeit des Motorrads kleiner werden. Der Zusammenhang zwischen der Geschwindigkeit und dem Zeitwert kann nichtlinear sein. Der Zusammenhang kann in einer Kurve oder Tabelle abgebildet sein. Der Zeitwert kann bei höherer Geschwindigkeit kleiner sein.

Eine Intensität der Abstandsinformation kann unter Verwendung der Zeitlücke eingestellt werden. Dabei kann die Intensität bei kleinerer Zeitlücke ansteigen.

Der Anstieg kann stufenlos erfolgen. Beispielsweise kann ein immer größeres Symbol dargestellt werden, je kleiner die Zeitlücke ist. Wenn die Zeitlücke kleiner als eine Gefährdungsschwelle ist, kann die Gefährdungsinformation bereitgestellt werden.

Eine Vorwarn-Abstandsinformation kann bereitgestellt werden, wenn die Zeitlücke kleiner als ein Vorwarn-Zeitwert ist. Eine Warn-Abstandsinformation kann bereitgestellt werden, wenn die Zeitlücke kleiner als ein Warn-Zeitwert ist. Die Warn-Abstandsinformation kann eine höhere Intensität als die Vorwarn-Abstandsinformation aufweisen. Der Warn-Zeitwert kann kleiner als der Vorwarn-Zeitwert sein. Durch unterschiedliche Warnstufen kann eine stufenweise Warnkaskade bereitgestellt werden. Die Warnkaskade kann auch in die Gefährdungsinformation zum Warnen vor akuter Gefahr und zum Auffordern zum Handeln übergehen.

Die Abstandsinformation kann bereitgestellt werden, wenn das Fahrzeug auf einer Fahrspur des Motorrads erkannt wird. Ein Fahrzeug auf einer benachbarten Fahrspur stellt keine latente Gefahr für das Motorrad dar, solange das Motorrad auf seiner Fahrspur bleibt.

Ein Totwinkelassistent des Motorrads kann aktiviert werden, wenn das Fahrzeug auf der benachbarten Fahrspur erkannt wird. Bei einem Totwinkelassistent kann eine seitenbezogenen Information bereitgestellt werden. Die Abstandsinformation für ein Fahrzeug auf der eigenen Fahrspur kann ohne Seitenbezug bereitgestellt werden. Bei dem Totwinkelassistent kann dem Fahrer die Seite angezeigt werden, auf der das andere Fahrzeug erkannt worden ist. Dann kann der Fahrer beispielsweise einen Spurwechsel unterlassen, um eine gefährliche Annäherung an das andere Fahrzeug zu vermeiden.

Ein Verlauf der Fahrspur kann unter Verwendung einer gefahrenen Trajektorie des Motorrads bestimmt werden. Eine gefahrene Trajektorie kann Kurven der Fahrspur abbilden. Damit kann die Abstandsinformation auch in den Kurven beziehungsweise auf einer kurvigen Strecke sicher bereitgestellt werden.

Der Zeitwert kann unter Verwendung einer Eingabe eines Fahrers des Motorrads eingestellt werden. Der Zeitwert kann durch den Fahrer vorgewählt werden.

Dadurch kann der Fahrer einstellen, ab wann er vor der latenten Gefahr gewarnt werden will. Der Zeitwert kann beispielsweise stufenlos, also ohne vordefinierte Stufen oder vordefinierte Werte eingestellt werden. Beispielsweise kann der Zeitwert über eine Bedienerschnittstelle des Motorrads, wie einen Schieberegler oder Drehregler eingestellt werden.

Für die Eingabe können zumindest zwei vordefinierte Zeitwerte zur Auswahl bereitgestellt werden. Die Zeitwerte können beispielsweise über eine Bedienerschnittstelle, wie vorbelegte Knöpfe oder eine Wippe ausgewählt werden. Insbesondere können ein niedriger, ein mittlerer und ein hoher Zeitwert zur Auswahl bereitgestellt werden. Dadurch kann der Fahrer in Stufen einstellen, ab wann er vor der latenten Gefahr gewarnt werden will.

Das Verfahren ist vorzugsweise computerimplementiert und kann beispielsweise in Software oder Hardware oder in einer Mischform aus Software und Hardware beispielsweise in einem Fahrerassistenzsystem implementiert sein.

Der hier vorgestellte Ansatz schafft ferner ein Steuergerät in Form eines Fahrerassistenzsystems für ein Fahrzeug, wobei das Fahrerassistenzsystem dazu ausgebildet ist, um die Schritte einer Variante des hier vorgestellten Verfahrens in entsprechenden Einrichtungen durchzuführen, anzusteuern bzw. umzusetzen.

Das Steuergerät bzw. Fahrerassistenzsystem kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Steuergeräts und des Verfahrens in geeigneter Weise kombiniert, angepasst oder ausgetauscht werden können, um zu weiteren Ausführungsformen der Erfindung zu gelangen.

Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.

Fig. 1 zeigt Darstellungen von Verkehrssituationen eines Motorrads mit einem Steuergerät gemäß einem Ausführungsbespiel;

Fig. 2 zeigt eine Darstellung einer Abstandsinformation durch ein Steuergerät gemäß einem Ausführungsbeispiel;

Fig. 3 zeigt Darstellungen von einstellbaren Zeitwerten an einem Motorrad mit einem Steuergerät gemäß einem Ausführungsbeispiel; und

Fig. 4 zeigt eine Darstellung einer Geschwindigkeitsabhängigkeit von Zeitwerten für ein Steuergerät gemäß einem Ausführungsbeispiel.

Die Figuren sind lediglich schematisch und nicht maßstabsgetreu. Gleiche Bezugszeichen bezeichnen gleiche oder gleichwirkende Merkmale.

Ausführungsformen der Erfindung

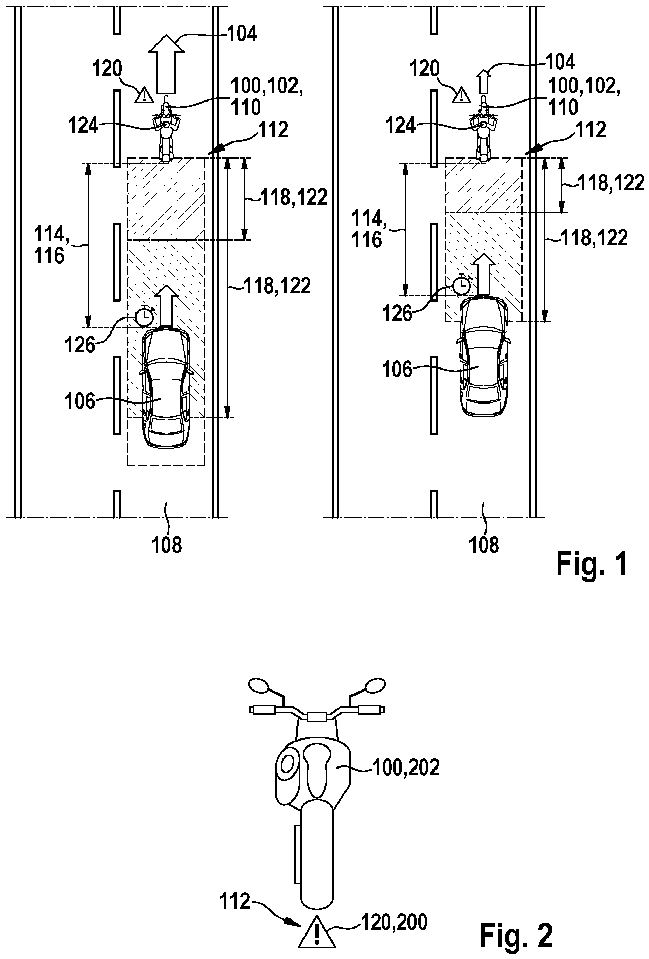

Fig. 1 zeigt Darstellungen von Verkehrssituationen eines Motorrads 100 mit einem Steuergerät 102 gemäß einem Ausführungsbespiel. Das Motorrad 100 fährt in den zwei dargestellten Verkehrssituationen jeweils mit unterschiedlicher Geschwindigkeit 104. In beiden Verkehrssituationen fährt ein Fahrzeug 106 auf einer Fahrspur 108 des Motorrads 100 hinter dem Motorrad 100 her. Das Motorrad 100 weist ein Sensorsystem 110 auf, welches das Fahrzeug 106 in einem Rückraum 112 hinter dem Motorrad 100 erfasst. Das Sensorsystem 110 erfasst dabei zumindest einen aktuellen Abstand 114 des Fahrzeugs 106 von dem Motorrad 100. Die Abstände 114 sind in den beiden Verkehrssituationen unterschiedlich.

Im Steuergerät 102 wird in einem Ausführungsbeispiel unter Verwendung des Abstands 114 und der Geschwindigkeit 104 des Motorrads 100 eine aktuelle Zeitlücke 116 zwischen dem Motorrad 100 und dem Fahrzeug 106 berechnet. Die Zeitlücke 116 repräsentiert dabei eine Zeitdauer, die vergeht, bis das Fahrzeug 106 den gleichen Punkt erreicht, den zuvor das Motorrad 100 überfahren hat. Wenn die Zeitlücke 116 kleiner als ein vordefinierter Zeitwert 118 ist, wird eine Abstandsinformation 120 bereitgestellt. Der Zeitwert 118 repräsentiert dabei einen geschwindigkeitsabhängigen Abstand 122, den das Fahrzeug 106 nicht unterschreiten soll. Je größer die Geschwindigkeit 104 ist, umso größer ist auch der geschwindigkeitsabhängige Abstand 122.

In einem Ausführungsbeispiel wird im Steuergerät 102 der geschwindigkeitsabhängige Abstand 122 unter Verwendung der des Zeitwerts 118 und der Geschwindigkeit 104 berechnet. Wenn der Abstand 114 des Fahrzeugs 106 kleiner als der geschwindigkeitsabhängige Abstand 122 ist, wird die Abstandsinformation 120 bereitgestellt.

Hier ist in beiden Verkehrssituationen die aktuelle Zeitlücke 116 kleiner als der Zeitwert 118 beziehungsweise hat das Fahrzeug 106 in beiden Verkehrssituationen den geschwindigkeitsabhängigen Abstand 122 unterschritten. In beiden Verkehrssituationen wird also die Abstandsinformation 120 bereitgestellt. Die Abstandsinformation 120 informiert hier einen Fahrer 124 des Motorrads 100 darüber, dass das Fahrzeug 106 nahe hinter dem Motorrad 100 fährt. Durch die Abstandsinformation 120 ist der Fahrer 124 vor einer latenten Gefahr durch das Fahrzeug 106 gewarnt. Die Abstandsinformation 120 signalisiert dem Fahrer 124 beispielsweise, dass er das Fahrzeug 106 im Rückspiegel beobachten soll, oder auch, dass er besser nicht unbegründet stark bremsen soll, um keine reale Gefahr durch das Fahrzeug 106 zu erzeugen.

In einem Ausführungsbeispiel wird die Abstandsinformation 120 bereitgestellt, nachdem das Fahrzeug 106 länger als eine vorbestimmte Zeitdauer 126 näher als der geschwindigkeitsabhängige Abstand 122 beziehungsweise mit einer kleineren Zeitlücke 116 als der Zeitwert 118 hinter dem Motorrad 100 fährt.

In einem Ausführungsbeispiel wird eine Vorwarn-Abstandsinformation 120 bereitgestellt, wenn die Zeitlücke 116 kleiner als ein Vorwarn-Zeitwert 118 ist beziehungsweise das Fahrzeug 106 näher als ein geschwindigkeitsabhängiger Vorwarn-Abstand 122 auffährt. Wenn das Fahrzeug 106 noch dichter auf das Motorrad 100 auffährt, also wenn der aktuelle Abstand 114 kleiner als ein geschwindigkeitsabhängiger Warn-Abstand 122 ist, beziehungsweise wenn die Zeitlücke 116 kleiner als ein Warn-Zeitwert 118 ist, wird eine Warn-Abstandsinformation 120 bereitgestellt. Der Warn-Zeitwert 118 beziehungsweise der Warn-Abstand 122 ist dabei kleiner als der Vorwarn-Zeitwert 118 beziehungsweise der Vorwarn-Abstand 122. Die Warn-Abstandsinformation 120 weist eine höhere Intensität als die Vorwarn-Abstandsinformation 120 auf. Durch die Verwendung von unterschiedlichen Zeitwerten 118 beziehungsweise geschwindigkeitsabhängigen Abständen 122 funktioniert das Bereitstellen der Abstandsinformation 120 stufenweise. Der Fahrer 124 wird so vor größer werdender latenter Gefahr immer stärker gewarnt.

In einem Ausführungsbeispiel erkennt das Sensorsystem 110, ob das Fahrzeug 106 auf der gleichen Fahrspur 108, wie das Motorrad 100 fährt. Die Fahrspur 108 kann dabei beispielsweise unter Verwendung einer zurückgelegten Trajektorie erkannt werden. So kann die Fahrspur auch in Kurven korrekt erkannt werden. Die Abstandsinformation 120 wird dabei bereitgestellt, wenn das Fahrzeug 106 auf der gleichen Fahrspur 108 fährt und näher als den geschwindigkeitsabhängigen Abstand 122 auffährt beziehungsweise mit einer kleineren Zeitlücke 116 als der Zeitwert 118 hinter dem Motorrad 100 fährt. Wenn das Fahrzeug 106 auf einer benachbarten Fahrspur fährt, wird beispielsweise ein Totwinkelassistent des Motorrads 100 aktiviert.

Fig. 2 zeigt eine Darstellung einer Abstandsinformation 120 durch ein Steuergerät gemäß einem Ausführungsbeispiel. Die Abstandsinformation 120 entspricht dabei im Wesentlichen der Abstandsinformation in Fig. 1. Hier wird die Abstandsinformation 120 als Warnsymbol 200 unter beziehungsweise hinter einem Motorradsymbol 202 für das Motorrad 100 dargestellt, um anzuzeigen, dass im Rückraum 112 latente Gefahr droht.

Die Abstandsinformation 120 wird hier über eine optische Anzeige für den Fahrer des Motorrads bereitgestellt. Die Anzeige kann beispielsweise in ein Kombiinstrument des Motorrads integriert sein. Die Anzeige kann auch in ein Helmdisplay oder Head-up-Display des Motorrads integriert sein. Ebenso kann die Anzeige auf einem mit dem Motorrad gekoppelten Mobilgerät, wie einem Navigationssystem oder einem Mobiltelefon erfolgen.

Das Warnsymbol 200 kann zum Anzeigen unterschiedlicher Intensitäten der latenten Gefahr in veränderbaren Farben und/oder veränderbaren Größen dargestellt werden, um mehr oder weniger Aufmerksamkeit des Fahrers zu erlangen. Hier ist das Warnsymbol 200 gelb und in Relation zum Motorradsymbol 202 klein dargestellt.

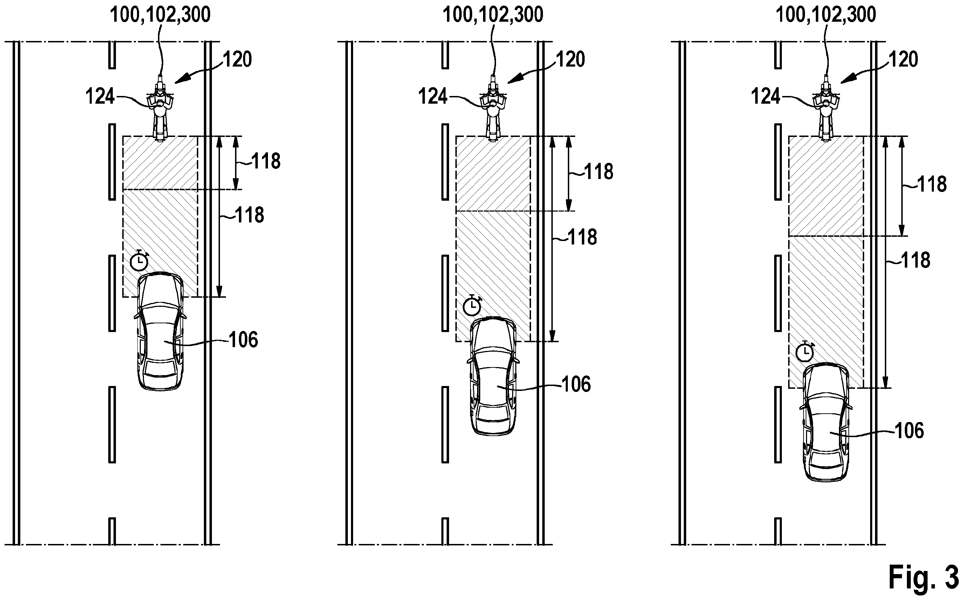

Fig. 3 zeigt Darstellungen von einstellbaren Zeitwerten 118 an einem Motorrad 100 mit einem Steuergerät 102 gemäß einem Ausführungsbeispiel. Das Motorrad 100 entspricht dabei im Wesentlichen dem Motorrad in Fig. 1. Zusätzlich weist das Motorrad 100 eine Bedienerschnittstelle 300 auf, über die der zumindest eine gerade verwendete Zeitwert 118 beeinflusst werden kann. Der Zeitwert kann dabei je nach persönlicher Vorliebe des Fahrers 124 erhöht oder verringert werden. Die Abstandsinformation 120 kann so je nach Vorliebe bei einem größeren oder kleineren Abstand des Fahrzeugs 106 zum Motorrad 100 bereitgestellt werden.

In einem Ausführungsbeispiel kann der Zeitwert 118 stufenlos eingestellt werden. Die Einstellung kann beispielsweise über einen Schieberegler oder Drehknopf erfolgen. Bei der stufenlosen Einstellung kann der Fahrer 124 genau seinen Wunsch-Zeitwert 118 einstellen.

In einem Ausführungsbeispiel kann der Zeitwert 118 aus vordefinierten, hinterlegten Werten ausgewählt werden. Beispielsweise kann zwischen diesen Werten durchgewechselt werden oder direkt einer der vordefinierten Werte angewählt werden. So kann der Fahrer 124 den am besten passenden Zeitwert 118 auswählen.

In einem Ausführungsbeispiel werden durch die Auswahl über die Bedienerschnittstelle 300 sowohl der Vorwarn-Zeitwert 118 als auch der Warn-Zeitwert 118 beeinflusst. Die verschiedenen Zeitwerte können dabei über einen an der Bedienerschnittstelle 300 einstellbaren gemeinsamen Faktor beeinflusst werden.

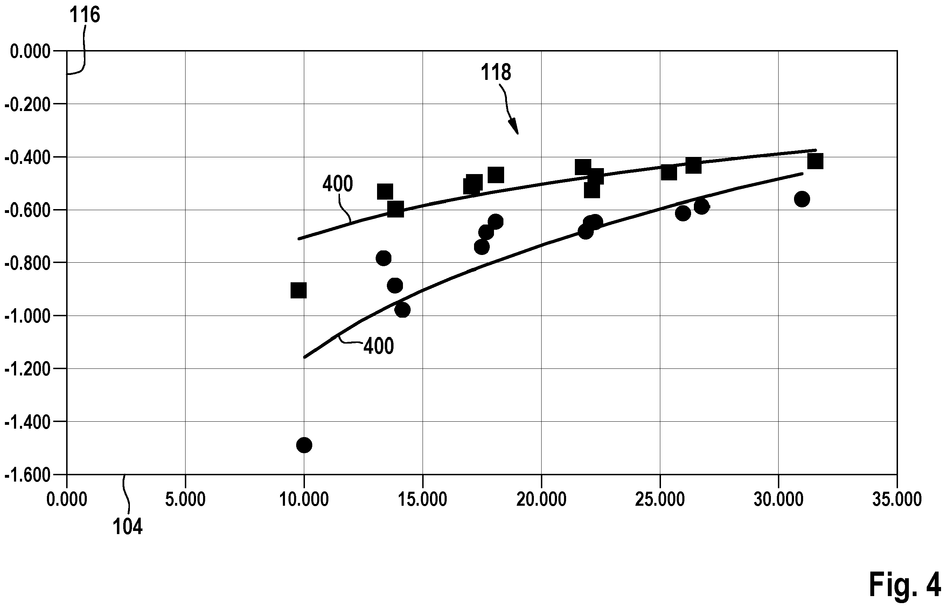

Fig. 4 zeigt eine Darstellung einer Geschwindigkeitsabhängigkeit von Zeitwerten 118 für ein Steuergerät gemäß einem Ausführungsbeispiel. Die Zeitwerte 118 sind in einem Diagramm dargestellt, das auf seiner Abszisse eine Geschwindigkeit 104 des Motorrads und auf seiner Ordinate Zeitlücken 116 angetragen hat. Die zu den Zeitlücken 116, bei denen die Abstandsinformation bereitgestellt werden soll, korrespondierenden Zeitwerte 118 sind für unterschiedliche Geschwindigkeiten 104 zwischen ca. 10 Meter pro Sekunde und ca. 32 m/s im Diagramm aufgetragen. Die Zeitwerte 118 betragen dabei zwischen ca. 1,5 Sekunden bei ca. 10 m/s und 0,4 Sekunden bei ca. 32 m/s. Die übrigen Zeitwerte 118 liegen dazwischen. Dabei besteht kein linearer Zusammenhang zwischen den Zeitwerten 118 und der Geschwindigkeit 104. Allgemein zeigt eine Verteilung der Zeitwerte 118 aber eine Abnahme der Zeitwerte 118 mit steigender Geschwindigkeit 104.

In einem Ausführungsbeispiel sind im Diagramm zwei Gruppen von Zeitwerten 118 angetragen. Die eine Gruppe repräsentiert höhere Vorwarn-Zeitwerte 118 für Vorwarn-Abstandsinformationen, während die andere Gruppe niedrigere Warn-Zeitwerte 118 für Warn-Abstandsinformationen repräsentiert. Die Vorwarn-Zeitwerte 118 sind dabei zwischen ca. 1,5 Sekunden bei 10 m/s und ca. 0,5 Sekunden bei ca. 31 m/s verteilt. Die Warn-Zeitwerte 118 sind zwischen 0,9 Sekunden bei 10 m/s und 0,4 Sekunden bei ca. 32 m/s verteilt.

In einem Ausführungsbeispiel sind im Diagramm Kennlinien 400 für die Vorwarn-Zeitwerte 118 und Warn-Zeitwerte 118 angetragen. Über die Kennlinien 400 kann zur aktuellen Geschwindigkeit 104 jeweils ein passender Vorwarn-Zeitwert 118 und Warn-Zeitwert 118 aus dem Diagramm ausgelesen werden.

Nachfolgend werden mögliche Ausgestaltungen der Erfindung nochmals zusammengefasst bzw. mit einer geringfügig anderen Wortwahl dargestellt.

Es wird eine rückwärtige Abstandsinformation für zweirädrige Fahrzeuge vorgestellt. Das Hauptziel ist es, einen Motorradfahrer mit einer Warninformation zu versorgen, wenn eine latente Gefahr durch hintere Objekte besteht, die von einem Heckradarsystem erkannt werden.

Latente Gefahr ist das Konzept der Gefahr für das betreffende Motorrad (und/oder das nachfolgende Fahrzeug) in Situationen, die noch nicht akut sind, aber sehr schnell eskalieren können, wie z. B. ein Fahrzeug, das dem betreffenden Fahrzeug mit gleicher Geschwindigkeit, aber in gefährlichem Abstand folgt.

Ein Warnsystem für einen Fahrer kann abhängig von der Zeit bis zur Kollision mit einem kritischen nachfolgenden oder sich nähernden Fahrzeug warnen. Die Zeit bis zur Kollision beruht dabei auf Faktoren, wie der Beschleunigung des Fahrzeugs und/oder der Verzögerung des Fahrzeugs. Bei dem hier vorgestellten Ansatz wird dagegen eine Warninformation in Szenarien mit latenter Gefahr ausgegeben. Eine Kritikalität wird dabei auf der Grundlage der absoluten Geschwindigkeit des Motorrads beschrieben.

Eine Heckerkennungseinheit (Heckradar) am betreffenden Motorrad erkennt relevante Fahrzeuge, von denen ein latentes Gefahrenrisiko ausgehen kann. Solche Fahrzeuge können als Zielfahrzeuge bezeichnet werden. Eine Entscheidungseinheit (insbesondere ebenfalls im Heckradar) entscheidet, ob von dem Fahrzeug ein hohes latentes Gefahrenrisiko ausgeht und ob eine Warnmeldung ausgegeben werden sollte. Eine HMI-Einheit (Head-Unit-Display, Fahrerhelm und/oder Heckwarnleuchten) sendet optisch oder akustisch ein Logo, eine Entfernungsangabe, eine Risikostufe oder einen Fahrzeugtyp an den Fahrer oder das nachfolgende Fahrzeug.

Die hintere Erfassungseinheit ist das Heckradar, das das Fahrzeug erkennt. Die latente Abstandswarnung befasst sich mit Folgesituationen bei zu geringem Abstand. Die Entscheidungseinheit befindet sich im Computer/ECU des hinteren Sensors. Die Entscheidungseinheit entscheidet, ob das Fahrzeug die Bedingungen für ein latentes Gefahrenrisiko erfüllt, und entscheidet dann über eine auszugebende Warnstufe.

Der Fahrer wird in Situationen gewarnt, die noch nicht akut sind, aber sehr schnell eskalieren können, wenn der Fahrer plötzlich abbremst. Die latente Warnung wird aktiviert, wenn erkannt wird, dass der Fahrer in einer latenten Gefahrensituation ist und eine Sicherheitszeitlücke über eine definierte Zeit unterschritten wird.

In einem Ausführungsbeispiel hat der Fahrer die Möglichkeit, verschiedene Schwellenwerte und/oder Schwellenwerte für die Sicherheitszeitlücke zu wählen.

Sicherheitszeitlücke heißt, wenn das betreffende Fahrzeug (Motorrad) seine Geschwindigkeit erhöht, erhöht sich auch der Schwellenwert für einen Sicherheitsabstand zur Auslösung von Informationen proportional.

Die Warnung wird ausgegeben, wenn der zeitliche Abstand zwischen dem betreffende Fahrzeug und dem nachfolgenden Fahrzeug für eine bestimmte Zeit unter einen bestimmten Grenzwert fällt. Der zeitliche Abstand wird berechnet als:

$$\text{Zeitabstand} = \text{relative Entfernung zum Fahrzeug / absolute Geschwindigkeit des Motorrads}$$

In diesem Zusammenhang ist der zulässige relative Abstand zwischen dem Heck des Motorrads und der Front des Fahrzeugs, bevor es die Warnmeldung auslöst, von der Geschwindigkeit des Motorrads abhängig:

$$\text{Schwelle Auslösung} = \text{absolute Geschwindigkeit des Motorrads} * \text{Zeitwert}$$

Wenn die Entscheidungseinheit (Radar) entscheidet, dass die Situation kritischer geworden ist, kann sie eine Warnkaskade auslösen (indem sie stärkere Warninformationen an den Fahrer oder den nachfolgenden Fahrer sendet) oder sie kann andere Motorrad-Assistenzsysteme aktivieren und sich dabei selbst unterdrücken oder anpassen.

Zum Beispiel wird als Warnschwelle die Warnstufe 1 gewählt, wenn die Zeitspanne kleiner 0,8s ist, und die Warnstufe 2, wenn die Zeitspanne kleiner 0,4s ist.

Eine Aktivierungsverzögerung bedeutet, dass die Warnung nicht ausgegeben wird, wenn der Zeitabstand nur sehr kurz unter dem Grenzwert liegt.

Diese Warnung hat einen informativen Charakter im HMI-Gerät. Wenn die Situation unverändert bleibt, wird kein Unfall passieren. Der Fahrer sollte jedoch über die umliegenden Verkehrsverhältnisse informiert sein, damit er die Möglichkeit hat, sein Fahrverhalten anzupassen. Mit der HMI-Warnung wird der Fahrer in die Lage versetzt, so zu reagieren, dass ein Unfall verhindert werden kann, wenn das nachfolgende Fahrzeug unerwartet stark beschleunigt oder umgekehrt, wenn das Motorrad schnell abbremst. Die Informationen, die dem Fahrer angezeigt werden, sind proportional zur Kritikalität der Situation. Zumindest wird der Fahrer bei latenter Gefahr optisch durch ein Logo auf der Head Unit gewarnt.

In einem Beispiel ist die hintere latente Entfernungsinformation von einer adaptiven Zeitspanne abhängig.

Die oben beschriebene RLADI-Funktion verwendet nur je eine feste Zeitabstandsschwelle für die Warnung der Stufe 1 oder 2 an den Fahrer. Wenn das nachfolgende Fahrzeug diesen festen Zeitabstand unterschreitet, wird eine Warnung ausgegeben. Bei unterschiedlichen Geschwindigkeiten des Ego-Fahrzeugs ist ein fester Zeitabstand jedoch möglicherweise nicht angemessen. Gründe dafür sind u. a. die höhere Schwere des Unfalls bei höheren Geschwindigkeiten, die theoretischen Grenzen der Brems- und Verzögerungskapazität des Fahrzeugs und die theoretischen Grenzen der menschlichen Reaktionszeit des Fahrzeugs. Die Zeitspanne, die dem Fahrer bei niedrigen Geschwindigkeiten die größte Sicherheit und den größten Komfort bietet, ist also möglicherweise nicht optimal für Situationen mit hohen Geschwindigkeiten. Außerdem können verschiedene Endnutzer unterschiedliche Präferenzen für dieses adaptive Zeitspannenverhalten haben.

Hier wird die Funktion an die Zeitabstände angepasst, die auf der Ego-Geschwindigkeit und der Einstellung der Zeitabstands-Kurve durch den Fahrer/Hersteller basieren.

Daher sind eine Möglichkeit zur Einstellung der Parameter für die Zeitlückenkurve und eine Online-Funktionsanpassung zur Änderung der Zeitlückenschwelle (für mehrere Warnstufen) in Abhängigkeit von der Ego-Geschwindigkeit erforderlich.

Offline wird eine Kurve als Basis für die adaptive Einstellung ausgewählt. Dabei kann es sich um die Kurvenfunktion oder um entlang der Kurve abgetastete Basispunkte handeln. Die Kurve kann linear, logarithmisch usw. sein. Die Einstellung kann vom Sensor- oder Fahrzeughersteller festgelegt und fest kodiert werden, und/oder sie kann vom Fahrer über eine HMI-Schnittstelle/Menüeinstellungen ausgewählt werden.

Während des Betriebs erfasst der Sensor, der die RLADI-Funktion realisiert, die Ego-Fahrzeuggeschwindigkeit. Unter Verwendung der Ego-Fahrzeuggeschwindigkeit als Eingabe (X-Wert) wird der ausgegebene Zeitabstandswert (Y-Wert) aus den im Speicher gespeicherten Zeitabstands-Kurveneinstellungen ermittelt und interpoliert. Die Funktion für die hintere latente Abstandsinformation wird dann wie üblich ausgeführt, wobei jedoch der berechnete Schwellenwert für den Zeitabstand und nicht der feste Wert verwendet wird.

Die latente Abstandsinformation wird nur bei Fahrzeugen aktiviert, die der Ego-Geschwindigkeit sehr nahekommen (d.h. keine Zeit bis zu einer Kollision berechnet werden kann), und schaltet sich nicht durchgängig in einem festen zeitlichen Abstand zum Ego ein, wenn sich die Ego-Geschwindigkeit ändert (d.h. das Warn-Timing passt sich an die Ego-Geschwindigkeit an).

In einem Beispiel wird die hintere latente Abstandsinformation für zweirädrige Fahrzeuge in Abhängigkeit von einer konfigurierbaren Zeitlückeneinstellung ausgegeben.

Die oben beschriebene Funktion definiert den Schwellenwert für die Warnzeitspanne als einen einstellbaren festen Wert für die hintere latente Abstandsinformation. Dies bedeutet, dass das Warnverhalten nach der Parametrierung des Systems festgelegt bleibt und der Fahrer nur die Möglichkeit hat, sich selbst entsprechend anzupassen.

Das hier vorgestellte konfigurierbare Zeitlückenschwellendesign bietet dem Fahrer die Möglichkeit, je nach seinen persönlichen Vorlieben zwischen verschiedenen Optionen zu wählen.

Die geänderten Algorithmen können in der Entscheidungseinheit implementiert werden, und die vom Benutzer auswählbare Schnittstelle für Warnzeitabstände kann in der HMI-Einheit implementiert werden.

Eine hintere Erfassungseinheit (Heckradar) auf einem Motorrad wird verwendet, um relevante nachfolgende Fahrzeuge zu erkennen und Messdaten zu übermitteln, die von der Entscheidungseinheit verarbeitet werden. Die Entscheidungseinheit (Heckradar-ECU) entscheidet auf der Grundlage des Gefahrenrisikos und der vom Benutzer gewählten Zeitspanne, ob eine Warnung vor dem nachfolgenden Fahrzeug ausgelöst werden soll. Die HMI-Einheit (Head-Unit-Display, Fahrerhelm, mit dem Motorrad verbundenes Smartphone, Warnanzeigen) empfängt die Warnungen und ermöglicht es dem Fahrer, die Zeitspanne für die Warnung entweder über diskrete Optionen (d. h. früh, mittel, spät) oder eine kontinuierliche Option (d. h. Schieberegler) zu konfigurieren.

Die Warnung wird ausgegeben, wenn der zeitliche Abstand zwischen dem Ego-Fahrzeug und dem Fahrzeug für eine bestimmte Zeit unter einen bestimmten Grenzwert fällt.

$$\text{Zeitabstand} = \text{relative Entfernung zum Fahrzeug} / \text{absolute Geschwindigkeit des Motorrads}$$

Zu dieser Zeitspanne wird hier ein konfigurierbarer Faktor K hinzugefügt. So wird der zulässige relative Abstand zwischen dem Heck des Motorrads und der Front des nachfolgenden Fahrzeugs berechnet, bevor es die Warnmeldung auslöst.

$$\text{Schwelle Auslösung} = \text{absolute Geschwindigkeit des Motorrads} * \text{Zeitwert} * K$$

Und entsprechend:

$$\text{Zeitabstand Auslösung} = \text{Zeitwert} * K$$

Die Warnkaskadenfunktion auf der Grundlage der Kritikalität der Situation kann auch den konfigurierbaren Faktor K enthalten. Die Einstellungen für die kritischen Warnstufen sind dann ebenfalls nach den Wünschen des Fahrers konfigurierbar.

Die Einstellungen für die Warnzeitspanne können im HMI-Gerät konfiguriert werden. Bei den Einstellungen im Optionsmenü kann es sich entweder um diskrete voreingestellte Optionen oder um einen kontinuierlichen Schieberegler handeln.

Bei einem nachfolgenden Fahrzeug in einem bestimmten Abstand wird eine Information proportional zur Fahrgeschwindigkeit ausgegeben. Es gibt entsprechende Einstellungen in der HMI-Einheit (Head-up-Display, Helmdisplay, mit dem Motorrad verbundene Smartphones), mit denen die Einstellungen für die Warnzeitspanne konfiguriert werden können.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

**Patentansprüche**

1. Verfahren zum Betreiben eines Motorrads (100), wobei mittels eines nach hinten gerichteten Sensorsystems (110) des Motorrads (100) ein Abstand (114) zwischen dem Motorrad (100) und einem in einem Rückraum (112) des Motorrads (100) nachfolgenden Fahrzeug (106) ermittelt wird und eine Abstandsinformation (120) an einer Mensch-Maschine-Schnittstelle bereitgestellt wird, wenn eine Zeitlücke (116), welche unter Berücksichtigung des ermittelten Abstands (114) sowie einer aktuellen Geschwindigkeit (104) des Motorrads (100) ermittelt wird, kleiner als ein vordefinierter Zeitwert (118) ist.

2. Verfahren gemäß Anspruch 1, bei dem die Abstandsinformation (120) bereitgestellt wird, wenn die Zeitlücke (116) länger als eine vordefinierte Zeitdauer (126) kleiner als der Zeitwert (118) ist.

3. Verfahren gemäß einem der vorhergehenden Ansprüche, bei dem die Abstandsinformation (120) bereitgestellt wird, wenn eine Annäherungsgeschwindigkeit des Fahrzeugs (106) an das Motorrad (100) kleiner als ein Grenzwert ist.

4. Verfahren gemäß Anspruch 3, bei dem eine, eine Gefährdung des Motorrads (100) durch das Fahrzeug (106) abbildende Gefährdungsinformation bereitgestellt wird, wenn die Annäherungsgeschwindigkeit größer als der Grenzwert ist.

5. Verfahren gemäß einem der vorhergehenden Ansprüche, bei dem der Zeitwert (118) unter Verwendung der Geschwindigkeit (104) des Motorrads (100) eingestellt wird.

6. Verfahren gemäß einem der vorhergehenden Ansprüche, bei dem eine Intensität der Abstandsinformation (120) unter Verwendung der Zeitlücke (116) eingestellt wird.

7. Verfahren gemäß Anspruch 6, bei dem eine Vorwarn-Abstandsinformation (120) bereitgestellt wird, wenn die Zeitlücke (116) kleiner als ein Vorwarn-Zeitwert (118) ist und eine Warn-Abstandsinformation (120) bereitgestellt wird, wenn die Zeitlücke (116) kleiner als ein Warn-Zeitwert (118) ist, wobei die Warn-Abstandsinformation (120) eine höhere Intensität als die Vorwarn-Abstandsinformation (120) aufweist und der Warn-Zeitwert (118) kleiner als der Vorwarn-Zeitwert (118) ist.

8. Verfahren gemäß einem der vorhergehenden Ansprüche, bei dem die Abstandsinformation (120) bereitgestellt wird, wenn das Fahrzeug (106) auf einer Fahrspur (108) des Motorrads (100) erkannt wird.

9. Verfahren gemäß Anspruch 8, bei dem ein Verlauf der Fahrspur (108) unter Verwendung einer gefahrenen Trajektorie des Motorrads (100) bestimmt wird.

10. Verfahren gemäß einem der vorhergehenden Ansprüche, bei dem der Zeitwert (118) unter Verwendung einer Eingabe eines Fahrers (124) des Motorrads (100) eingestellt wird.

11. Verfahren gemäß Anspruch 10, bei dem für die Eingabe zumindest zwei vordefinierte Zeitwerte (118) zur Auswahl bereitgestellt werden.

12. Steuergerät (102), wobei das Steuergerät (102) dazu konfiguriert ist, das Verfahren gemäß einem der vorhergehenden Ansprüche in entsprechenden Einrichtungen auszuführen, umzusetzen und/oder anzusteuern.

13. Computerprogrammprodukt, das dazu eingerichtet ist, einen Prozessor bei Ausführung des Computerprogrammprodukts dazu anzuleiten, das Verfahren gemäß einem der Ansprüche 1 bis 11 auszuführen, umzusetzen und/oder anzusteuern.

14. Maschinenlesbares Speichermedium, auf dem das Computerprogrammprodukt gemäß Anspruch 13 gespeichert ist.

Fig. 1

Fig. 2

Fig. 3

Fig. 4

Europäisches Patentamt

European Patent Office

Office européen des brevets

# EUROPÄISCHER RECHERCHENBERICHT

**Nummer der Anmeldung**

EP 24 15 2850

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2017 212432 A1 (BOSCH GMBH ROBERT [DE]) 24. Januar 2019 (2019-01-24) | 1,3-14 | INV. G08G1/16 |
| Y | * Zusammenfassung *<br>* Absätze [0006], [0008], [0011] - [0017], [0019], [0021], [0022], [0024] - [0027], [0030], [0032] *<br>* Ansprüche 1-14 *<br>* Abbildungen 1,3 * | 2 | B62J6/24<br>B62J45/412<br>B62J50/22 |
| | ----- | | |
| Y | WO 2022/229805 A1 (BOSCH GMBH ROBERT [DE]) 3. November 2022 (2022-11-03) | 2 | |
| A | * Zusammenfassung *<br>& EP 4 331 937 A1 (BOSCH GMBH ROBERT [DE]) 6. März 2024 (2024-03-06)<br>* Zusammenfassung *<br>* Ansprüche 1-14 *<br>* Absätze [0004], [0006], [0007], [0012], [0017], [0019], [0020], [0022], [0025], [0027] - [0030] *<br>* Abbildung 1 * | 1,3-14 | |
| | ----- | | **RECHERCHIERTE SACHGEBIETE (IPC)** |
| A | US 2021/197816 A1 (HORN JACOB R [US] ET AL) 1. Juli 2021 (2021-07-01)<br>* Zusammenfassung *<br>* Abbildungen 2,4,10 *<br>* Absätze [0006], [0007], [0009], [0051], [0053], [0066], [0072], [0104] - [0107] * | 1-14 | G08G<br>B62M<br>B62J |
| | ----- | | |
| A | DE 10 2017 219892 A1 (BOSCH GMBH ROBERT [DE]) 9. Mai 2019 (2019-05-09)<br>* Zusammenfassung *<br>* Absätze [0002], [0012], [0013] *<br>* Ansprüche 1-8 *<br>* Abbildung 2 * | 1-14 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 6. Juni 2024 | Quartier, Frank |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 15 2850

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-06-2024

| Im Recherchenbericht angeführtes Patentdokument | Datum der Veröffentlichung | Mitglied(er) der Patentfamilie | Datum der Veröffentlichung |
|---|---|---|---|
| DE 102017212432 A1 | 24-01-2019 | CN      109285372 A | 29-01-2019 |
|  |  | DE 102017212432 A1 | 24-01-2019 |
|  |  | FR      3069364 A1 | 25-01-2019 |
| WO 2022229805    A1 | 03-11-2022 | CN      117222566 A | 12-12-2023 |
|  |  | EP       4331937 A1 | 06-03-2024 |
|  |  | JP WO2022229805 A1 | 03-11-2022 |
|  |  | WO      2022229805 A1 | 03-11-2022 |
| US 2021197816    A1 | 01-07-2021 | CN      113784886 A | 10-12-2021 |
|  |  | EP       3841004 A1 | 30-06-2021 |
|  |  | JP       7293340 B2 | 19-06-2023 |
|  |  | JP      2021535029 A | 16-12-2021 |
|  |  | JP      2023113851 A | 16-08-2023 |
|  |  | US      2021197816 A1 | 01-07-2021 |
|  |  | WO      2020041188 A1 | 27-02-2020 |
| DE 102017219892 A1 | 09-05-2019 | CN      111372828 A | 03-07-2020 |
|  |  | DE 102017219892 A1 | 09-05-2019 |
|  |  | US      2020290602 A1 | 17-09-2020 |
|  |  | WO      2019091744 A1 | 16-05-2019 |

EPO FORM P0461

Für nähere Einzelheiten zu diesem Anhang : siehe Amtsblatt des Europäischen Patentamts, Nr.12/82